# EUROPEAN PATENT SPECIFICATION

(11) **EP 4 144 912 B1**
(45) Date of publication and mention of the grant of the patent: **30.09.2026**
(21) Application number: 22189468.6
(22) Date of filing: 09.08.2022
(51) Int. Cl.: D21B 1/34, D21D 5/16

(54) **PULP SCREENING MACHINE**
ZELLSTOFFSIEBMASCHINE
MACHINE DE CRIBLAGE DE PÂTE

(30) Priority: 01.09.2021 CN 202111021314
(43) Date of publication of application: 08.03.2023
(73) Proprietor: Andritz (China) Ltd., Foshan, Guangdong 528000 (CN)
(72) Inventor: GSCHEIDER, Alexander, 8785 Hohentauern (AT)
(74) Representative: Tschinder, Thomas

(56) References cited:
- DE-A1- 3 733 928
- DE-U1- 8 909 871
- US-A- 5 192 438

## Description

### TECHNICAL FIELD

The invention relates to a pulp screening machine comprising a rotor and a screen plate.

### BACKGROUND

There are usually welded or bolted (or a combination of both) wear strips on surface of Screen plates on pulp screening machine. The wear strips form as strip type projections to provide cleaning function as well as de-flaking function.

The drawback of such wear strips on the screen plate is the rather fast wearing of the wear strips as well as the fact that the rotor must maintain a certain gap to the wear strips during assembling and therefore results in an even bigger gap to the surface of the main body of the screen plate, which reduces screen plate cleaning efficiency, throughput, and de-flaking rate. DE 89 09 871 U1 discloses a cylindrical screen with grooves in the screen plate. The grooves are parallel to the rotor axis and comprise openings for the pulp. US 5 192 438 A discloses a screening apparatus with a rotor having a non-cylindrical shape. The screen cylinder has grooves with apertures for the pulp, which are located at the bottom of the grooves. DE 37 33 928 A1 discloses a cylindrical screening apparatus with grooves in the screen plates. The grooves are parallel to the rotor axis.

### SUMMARY

Thus, to eliminate said shortcomings of the state of the art, the present invention provides a screen plate on the pulp screening machine. The screen plate has concave grooves on the side towards the rotor of the pulp screening machine, wherein except in the grooved region the rotor vane builds an even gap to the surface of the screen plate, wherein the rotor vane front edge of the pulp screening machine is arranged at an angle to the grooves.

With difference to the state of art, grooves are arranged on the screen plate of the present invention instead of conventional strip type projections. Herein the grooves are not through grooves, but build up concave forms, in which the groove bottoms are slightly lower than the main body of the screen plate surface. Using grooves instead of projections allows to minimize the gap between the rotor and the surface of the screen plate, which increases the cleaning efficiency of the screen plate, throughput or yield of the pulp screening machine, as well as increases de-flaking efficiency. The smaller the gap between the rotor vanes and the surface of the screening plate outside the area of the grooves, the lesser the amount of impurities could enter into the gap between the rotor vanes and the screen plate, and thus lesser wearing and longer life time of the rotor and the screen plate.

Said "even gap" formed between the grooved region and the surface of the screen plate means that except in the grooved region there is no substantial break, indentation, projection, or irregularity on the surface of the screen plate. There might be slight difference in the width of gap here and there, or even inclination, so long as such difference is allowable in the conventional art. The purpose of replacing the conventional strip type projections on the screen plate with the grooves therein is to minimize the width of the gap. It is even possible for a technical solution with some protrusions on the screen plate to be regarded as an "even gap" as defined in the present invention, as long as such protrusions do not substantially increase the width of the gap between the rotor vane and the surface of the screen plate.

According to the present invention, the grooves are designed to form angles larger than 90° with the front edge of the rotor vane in the total length of the grooves, so as to avoid wedging-in of the impurities and facilitate the de-flaking of the impurities.

According to one of the preferred embodiments in the present invention, the grooves width is increasing from the center of the screen plate to the outside. Due to the "wiping effect", the amount of collected impurities on the rotor vane front edge will increase from inside of the screen plate to outside. The increased grooves width from the center of the screen plate to the outside adapts to such increasing amount of collected impurities.

According to one of the preferred embodiments in the present invention, the grooves depth is increasing from the center of the screen plate to the outside. Due to the "wiping effect", the amount of collected impurities on the rotor vane front edge will increase from inside of the screen plate to outside. The increased grooves depth from the center of the screen plate to the outside adapts to such increasing amount of collected impurities.

According to one of the preferred embodiments in the present invention, the grooves width and depth is increasing from the center of the screen plate to the outside. Due to the "wiping effect", the amount of collected impurities on the rotor vane front edge will increase from inside of the screen plate to outside. The increased grooves width and depth from the center of the screen plate to the outside adapts to such increasing amount of collected impurities.

According to one of the preferred embodiments in the present invention, the grooves have larger width at their openings than at their bottoms. With such groove design, it is less possible to accumulate impurities within the grooves.

According to one of the preferred embodiments of the present invention, the screening plate is flat.

Preferably, both longitudinal ends of the grooves are open, so that the center of the screen plate is in communication with its peripheral region.

According to one of the preferred embodiments of the present invention, the screen plate is curved.

Preferably, the screen plate is the cylindrical surface of the cylindrical screen basket.

Preferably, the screen plate is the conical surface of the conical screen basket.

Preferably, the screen plate (100) is perforated or slotted, no matter it is flat or curved.

The present invention also provides a pulp screening machine comprising a rotor and said screen plate.

### BRIEF DESCRIPTION OF THE DRAWINGS

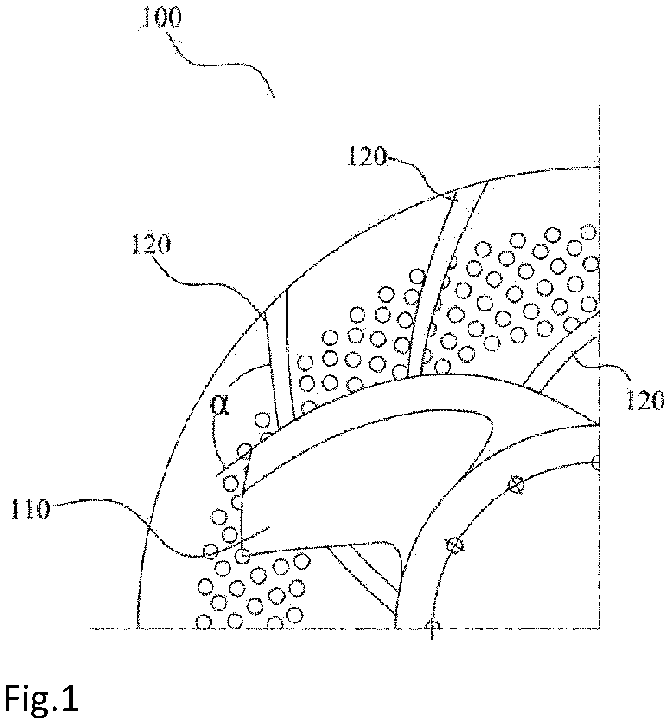

FIG. 1 schematically shows a partial section view of a preferably embodiment of the screen plate according to the present application.

### DETAILED DESCRIPTION

FIG. 1 schematically shows a preferably embodiment of the screen plate according to the present application. As Fig.1 shows, the screen plate 100 is provided by the present application for the pulp screening machine. The screen plate 100 has concave grooves 120 on the side towards the rotor 110 of the pulp screening machine , wherein except in the grooved region an even gap is formed between the vane of the rotor 110 and the surface of the screen plate 100, wherein the concave grooves 120 of screen plate 100 are designed to form an angles α larger than 90° with the front edge of the rotor vane in the total length of the grooves (120). For example, Fig. 1 shows that three grooves intersect with the front edge of the rotor vane, and the angles formed by grooves and the front edge of the rotor vane are all larger than 90° at every intersection point.

The width of grooves 120 increases from the center of the screen plate to the outside. The screen plate 100 is flat, both longitudinal ends of the grooves 120 are open, so as to communicate the center of screen plate 100 with its peripheral region.

The advantages of the present invention are as follows: using grooves instead of projections allows to minimize the gap between rotor and screen plate, which increases de-flaking efficiency as well as capacity. Due to the impurities, especially the large impurities are hard to stay between the rotor and the screen plate, the smaller gap could restrict impurities to enter the gap. Accordingly, the power consumption of the pulp screening machine decreases. Due to the lower probability of impurities getting into the gap between the rotor and the screen plate, the wearing is reduced accordingly.

Alternatively, in an embodiment not shown the surface of the screen plate could be designed as an curved surface or even a cylindrical surface of a cylindrical screen basket or a conical surface of a conical screen basket. Using grooves instead of projections on any shapes of screen plate could obtain the same advantages.

Moreover, despite that Fig.1 shows the screen holes on the screen plate 100. It could be understood that said screen plate might also be a slotted screen.

The above discloses the preferable embodiments of this invention, while the scope of this invention are not limited within the specific contents disclosed here. Those skilled in the art can develop more embodiments and applications according to teaching of this invention, and these embodiments and applications also belong to the scope of this invention. Therefore, it could be understood that the specific embodiments of this invention do not further limit the scope of this invention, which is defined by the claims.

### Reference number list

- 100: screen plate
- 110: rotor vane
- 120: groove
- α: the angle between the groove and the rotor vane front edge

## Claims

1. Pulp screening machine which includes a rotor (110) and a screen plate (100),
wherein,
on a side towards the rotor (110) of the pulp screening machine, the screen plate (100) has concave grooves (120), wherein except in the region having grooves an even gap is formed between the vane of the rotor (110) and the surface of the screen plate (100), wherein the grooves are not through grooves, but build up concave forms, in which the groove bottoms are slightly lower than the main body of the screen plate surface, **characterized in that** the front edge of the vane of the rotor (110) of the pulp screening machine is arranged at an angle to the grooves (120), and the concave grooves (120) of the screen plate (100) are designed to form angles larger than 90° with the front edge of the rotor vane in the total length of the grooves (120).

2. The Pulp screening machine according to Claim 1,
**characterized in that**,
the width of the grooves (120) increases from the center of the screen plate (100) to the outside.

3. The Pulp screening machine according to Claim 1,
**characterized in that**,
the depth of the grooves (120) increases from the center of the screen plate (100) to the outside.

4. The Pulp screening machine according to Claim 1,
**characterized in that**,
the width and the depth of the grooves (120) increases from the center of the screen plate (100) to the outside.

5. The Pulp screening machine according to any of Claims 1 to 4,
**characterized in that**,
the grooves (120) have larger width at their openings than at their bottoms.

6. The Pulp screening machine according to any one of Claims 1 to 5,
**characterized in that**,
the screen plate (100) is flat.

7. The Pulp screening machine according to Claim 6,
**characterized in that**,
both longitudinal ends of the grooves (120) are open, so that the center of the screen plate (100) is in communication with its peripheral region.

8. The Pulp screening machine according to any of Claims 1 to 5,
**characterized in that**,
the screen plate (100) is curved.

9. The Pulp screening machine according to any one of Claims 1 to 5,
**characterized in that**,
the screen plate (100) is perforated or slotted.

## Patentansprüche

1. Faserstoffsiebmaschine, die einen Rotor (110) und ein Siebblech (100) umfasst,
wobei
das Siebblech (100) auf der dem Rotor (110) der Faserstoffsiebmaschine zugewandten Seite konkave Nuten (120) aufweist, wobei außer in dem Bereich mit Nuten ein gleichmäßiger Spalt zwischen dem Rotorflügel (110) und der Oberfläche des Siebblechs (100) ein gleichmäßiger Spalt gebildet wird, wobei die Nuten keine Durchgangsnuten sind, sondern konkave Formen bilden, bei denen die Nutböden geringfügig tiefer liegen als der Hauptkörper der Siebblechoberfläche, **dadurch gekennzeichnet, dass** die Vorderkante des Rotorflügels (110) der Faserstoffsiebmaschine in einem Winkel zu den Nuten (120) angeordnet ist, und die konkaven Nuten (120) des Siebblechs (100) so ausgebildet sind, dass sie über die gesamte Länge der Nuten (120) hinweg Winkel von mehr als 90° mit der Vorderkante der Rotorflügel bilden.

2. Die Faserstoffsiebmaschine nach Anspruch 1,
**dadurch gekennzeichnet, dass**,
die Breite der Nuten (120) von der Mitte des Siebblechs (100) nach außen hin zunimmt.

3. Die Faserstoffsiebmaschine nach Anspruch 1,
**dadurch gekennzeichnet, dass**,
die Tiefe der Nuten (120) von der Mitte des Siebblechs (100) nach außen hin zunimmt.

4. Die Faserstoffsiebmaschine nach Anspruch 1,
**dadurch gekennzeichnet, dass**,
die Breite und die Tiefe der Nuten (120) von der Mitte des Siebblechs (100) nach außen hin zunimmt.

5. Die Faserstoffsiebmaschine nach Ansprüchen 1 bis 4,
**dadurch gekennzeichnet, dass**,
die Nuten (120) an ihren Öffnungen eine größere Breite aufweisen als an ihren Böden.

6. Die Faserstoffsiebmaschine nach einem der Ansprüche 1 bis 5,
**dadurch gekennzeichnet, dass**,
das Siebblech (100) flach ist.

7. Die Faserstoffsiebmaschine nach Anspruch 6,
**dadurch gekennzeichnet, dass**,
beide Längsenden der Nuten (120) offen sind, so dass die Mitte des Siebblechs (100) mit ihrem Randbereich in Verbindung steht.

8. Die Faserstoffsiebmaschine nach einem der Ansprüche 1 bis 5,
**dadurch gekennzeichnet, dass**,
das Siebblech (100) gekrümmt ist.

9. Das Siebblech (100) nach einem der Ansprüche 1 bis 5,
**dadurch gekennzeichnet, dass**,
das Siebblech (100) perforiert oder mit Schlitzen versehen ist.

## Revendications

1. Machine de tamisage de pâte qui comprend un rotor (110) et une plaque de tamisage (100),
dans laquelle
sur une face en regard du rotor (110) de la machine de tamisage de pâte, la plaque de tamisage (100) présente des rainures concaves (120), dans lequel sauf dans une région comportant des rainures, un espace régulier est formé entre la palette du rotor (110) et la surface de la plaque de tamisage (100), dans laquelle les rainures ne sont pas des rainures traversantes, mais des formes concaves intégrées, dans lesquelles les fonds de rainure sont légèrement inférieurs au corps principal de la surface de plaque de tamisage, **caractérisée en ce que** le bord avant de la palette du rotor (110) de la machine de tamisage de pâte forme un angle avec les rainures (120), et les rainures concaves (120) de la plaque de tamisage (100) sont conçues de manière à former des angles supérieurs à 90 ° avec le bord avant de la palette de rotor 1n sur toute la longueur des rainures (120).

2. Machine de tamisage de pâte selon la revendication 1,
**caractérisée en ce que**
la largeur des rainures (120) augmente à partir du centre de la plaque de tamisage (100) vers l'extérieur.

3. Machine de tamisage de pâte selon la revendication 1,
**caractérisée en ce que**
la profondeur des rainures (120) augmente à partir du centre de la plaque de tamisage (100) vers l'extérieur.

4. Machine de tamisage de pâte selon la revendication 1,
**caractérisée en ce que**
la largeur et la profondeur des rainures (120) augmentent à partir du centre de la plaque de tamisage (100) vers l'extérieur.

5. Machine de tamisage de pâte selon la revendication 1 à 4,
**caractérisée en ce que**
les rainures (120) présentent une largeur supérieure au niveau de leur ouverture à celle au niveau de leur fond.

6. Machine de tamisage de pâte selon l'une quelconque des revendications 1 à 5,
**caractérisée en ce que**
la plaque de tamisage (100) est plate.

7. Machine de tamisage de pâte selon la revendication 6,
**caractérisée en ce que**
chacune des extrémités longitudinales des rainures (120) sont ouvertes, de manière que le centre de la plaque de tamisage (100) soit en communication avec sa région périphérique.

8. Machine de tamisage de pâte selon l'une quelconque des revendications 1 à 5,
**caractérisée en ce que**
la plaque de tamisage (100) est incurvée.

9. Plaque de tamisage (100) selon l'une quelconque des revendications 1 à 5,
**caractérisée en ce que**
la plaque de tamisage (100) est perforée ou à fentes.
